Europäisches Patentamt

European Patent Office

Office européen des brevets

(11) Publication number: **0 269 210 B1**

# EUROPEAN PATENT SPECIFICATION

(45) Date of publication of patent specification: **27.12.91**    (51) Int. Cl.⁵: **B60P 1/44**, B60R 16/02

(21) Application number: **87307777.0**

(22) Date of filing: **03.09.87**

(54) **Safety system for preventing unauthorized use of powered liftgates.**

(30) Priority: **26.09.86 US 911740**

(43) Date of publication of application:
**01.06.88 Bulletin  88/22**

(45) Publication of the grant of the patent:
**27.12.91 Bulletin  91/52**

(84) Designated Contracting States:
**AT BE CH DE ES FR GB GR IT LI LU NL SE**

(56) References cited:
**US-A- 3 658 196**
**US-A- 3 700 123**

(73) Proprietor: **Diesel Equipment Limited**
**139 Laird Drive**
**Toronto Ontario M4G 3V6(CA)**

(72) Inventor: **Martin, Paul H.**
**124 Lawrence Crescent**
**Toronto Ontario M4N IN6(CA)**

(74) Representative: **Pacitti, Pierpaolo A.M.E. et al**
**Murgitroyd and Company Mitchell House 333**
**Bath Street**
**Glasgow G2 4ER Scotland(GB)**

## Description

This invention relates to motor vehicles such as trucks or vans which have powered liftgate systems. In particular, this invention relates to motor vehicles which have an electrically activated hazard warning system such as the "flasher" system which causes the parking lights of the vehicle to flash on and off.

Powered tailgate systems such as that described in U.S. P 3,658,196 have been known for many years. Various attempts have been made to provide a control system which would prevent use of the liftgate when not directly supervised by the vehicle operator. It is however, necessary to provide a control for the powered liftgate which can be operated by the vehicle operator when the powered liftgate is in the full view of the operator. Generally the liftgate is located at the back of the vehicle at a point remote from the driver's cab with the result that and on/off switch which may be provided in the liftgate system and which is located in the driver's cab is likely to be left in the on position by the driver so as to avoid the inconvenience of having to go back and forth between the cab and the rear of the vehicle.

Motor vehicles which are presently manufactured for use with powered liftgates include a hazard warning system which provides flashing lights which serve to indicate to approaching traffic that the vehicle represents a hazard. In some hazard warning systems, an audible pulsating signal is also generated.

I have found that if the electrical circuit which is used to power the hazard warning devices is also used to control the electrical circuit which powers the liftgate system, the vehicle operator is not likely to leave the hazard warning system in an active condition in order to minimize the inconvenience resulting from the fact that the powerlift system is not always live.

The hazard warning system of most motor vehicles is one in which an intermittent signal is generated in order to cause the warning lamps to flash off and on. This intermittent signal is not suitable in itself for the purposes of controlling the liftgate circuit because the liftgate system requires a continuous supply of power in order to permit it to operate effectively.

To achieve integration of the hazard warning system and the liftgate system, I provide a means for generating a continuous signal from the hazard warning signal which is then used as a control signal which permits operation of the liftgate circuit.

It is an object of the present invention to control the operation of the liftgate system so that it can be activated when the hazard warning system is active.

According to one aspect of the present invention, there is provided a motor vehicle which has a powered liftgate and which includes a liftgate electrical circuit for activating the liftgate to raise and lower the liftgate and a hazard warning circuit for operating the pulsating hazard warning light system of the vehicle, characterised by a relay in the liftgate circuit, said relay being responsive to the operation of the hazard warning circuit to render the liftgate circuit operable when the hazard warning circuit is operating.

### Brief Description of Drawings

The invention will be more clearly understood after reference to the following detailed specification read in conjunction with the drawings wherein;

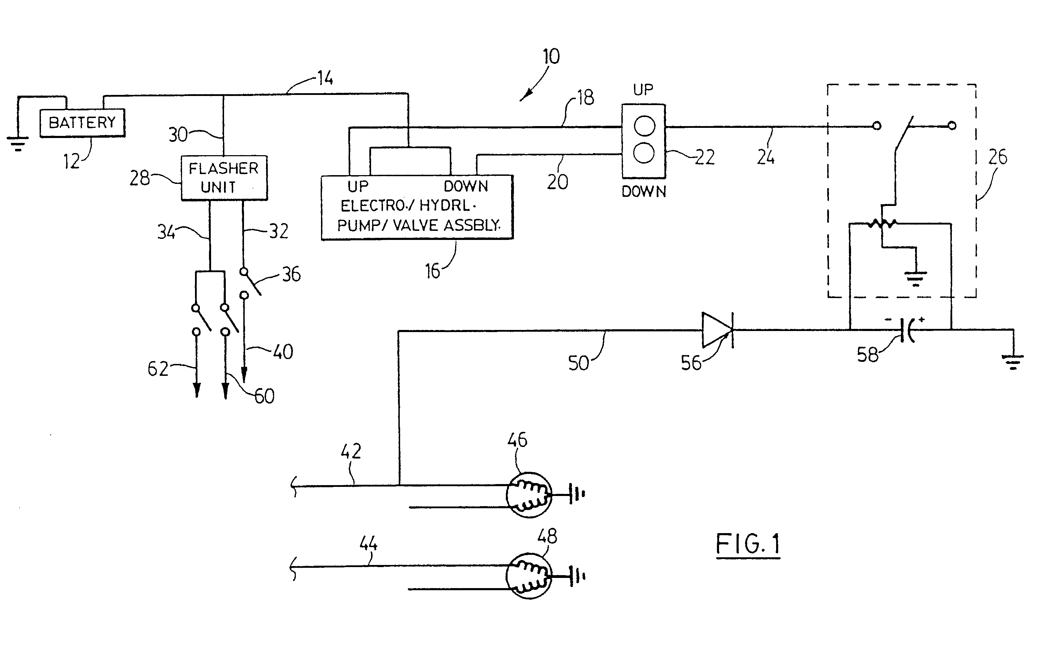

Figure 1 is a diagram illustrating one system for communicating between a hazard warning circuit and the liftgate circuit.

### Preferred Embodiment

With reference to Figure 1 of the drawings, the reference numeral 10 refers generally to a liftgate electrical circuit. The power source is a battery 12 which is connected through a line 14 to the electro-hydraulic pump/valve assembly 16 which serves to power the liftgate. The electro-hydraulic pump/valve assembly 16 is of a conventional construction and will not therefore be described in detail. The lines 18 and 20 serve to connect the assembly 16 to a push button switch 22. The line 24 connects the push button switch 22 to a relay generally identified by the reference numeral 26. The relay 26 is normally open and the liftgate electrical circuit is not complete until the relay is closed.

The hazard warning circuit includes a conventional flasher unit 28 which is connected to the line 14 by means of a line 30. The flasher unit 28 is the conventional flasher unit used for the purposes of generating an intermittent electrical signal which is transmitted through the line 32 to the hazard warning light and through the line 34 to the turning signals. The hazard warning circuit is activated by closing the switch 36. The line 40 which leads from the switch 36 is connected in a conventional manner to the lines 42 and 44 which are connected to the right rear hazard warning lamp 46 and the left rear hazard warning lamp 48 respectively.

The relay 26 is made responsive to the operation of the hazard warning circuit by providing a line 50 which is connected to the line 42 and the relay 26. Because the signal which is generated in the line 42 is an intermittent signal, a capacitor 58 is provided in the line 50 for the purposes of providing a continuous signal to the relay 26. The relay 26 is connected to the line 50 across the capacitor 58. A diode 56 is provided in the line 50 in advance of the capacitor 58.

It will be noted that as is conventional in the electrical circuit of a motor vehicle such as a truck, the lines 60 and 62 which extend from the turn signal switches are connected to the lines 42 and 44 respectively with the result that the relay 26 will also respond to the intermittent signal generated by activating the turn signals. This is not, however, considered to be a major disadvantage because the turn signals themself constitute a hazard warning system and also include both a visual and audible signal in the driver's compartment which the driver will not normally tolerate.

In many applications, the lamps 46 and 48 may also be activated by a switch associated with the foot brake of the vehicle. It follows that in some circumstances, the relay 26 may be activated by the operation of the foot brake. Again, however, this is not considered to be a significant drawback because the driver must be present in the vehicle in order to activate the foot brake switch and would therefore be in a position to determine whether any unauthorized persons were attempting to operate the liftgate system.

In use, when the operator wishes to operate the liftgate system, the first step is to close the hazard switch 36 in order to activate the hazard warning circuit. The relay 26 is then automatically activated. It is then possible for the operator to raise or lower the liftgate by operating the up or down button of the push button device 22.

From the foregoing, it will be apparent that the present invention provides a simple and efficient safety switching system in the liftgate circuit of a powered liftgate system which will provide a clear indication that the liftgate system is in a condition which will permit it to be operated by its own operating switch. This system also serves to discourage the practice of bypassing additional safety switches by simply setting the switch in the closed position because in this case, it would involve activating the hazard warning circuit and thereby activating the hazard warning lights and audible signal devices which are present in the driver's compartment.

It would also be apparent that the present invention can be incorporated into any number of existing vehicles without difficulty.

These and other advantages of the present invention will be apparent to those skilled in the art.

## Claims

1. A motor vehicle which has a powered liftgate and which includes a liftgate electrical circuit (10) which communicates with an electrical power source (12) and which, when complete, serves to activate the liftgate to raise and lower the liftgate and a hazard warning circuit for independently operating the pulsating hazard warning light system of the vehicle, characterised by;

   a relay (26) in the liftgate circuit (10), said relay (26) being responsive to the operation of the hazard warning circuit (28, 32, 36, 40) to render the liftgate circuit (10) operable only when the hazard warning circuit is operating.

2. A motor vehicle as claimed in claim 1 characterised in that the relay (26) is a normally-open rely and circuit means (50, 56, 58) which communicates between said relay (26) and said hazard warning circuit (42, 46) to cause the relay (26) to close when the hazard warning circuit is complete and the hazard warning system is in operation.

3. A motor vehicle as claimed in claim 2, wherein said circuit means (50, 56, 58) communicating between said relay and said hazard warning system serves to generate a continuous electrical signal from the intermittent signal generated by the hazard warning system and to transmit the continuous signal to said relay.

4. A motor vehicle as claimed in claim 3, wherein the hazard warning light system includes front and back warning lights (46, 48) located at the front and back of the vehicle respectively and wherein the circuit means communicating between the relay and the hazard warning circuit is connected to the hazard warning circuit at a point adjacent the rear lights of the vehicle.

## Revendications

1. Véhicule à moteur comprenant une porte à lever mécanisée et un circuit électrique (10) de porte à lever relié à une source de puissance électrique (12) et qui, lorsqu'il est fermé, sert à actionner la porte pour la lever ou l'abaisser, ainsi qu'un circuit avertisseur de danger pour rendre opérationnel de manière indépendante le système de feux clignotants avertisseurs de danger,

   caractérisé par

   un relais (26) dans le circuit (10) de la porte, ledit relais agissant en réponse au fonctionnement du circuit avertisseur de danger (28, 32, 36, 40) pour rendre le circuit (10) de porte opérationnel seulement lorsque le circuit avertisseur de danger est en fonctionnement.

2. Véhicule à moteur selon la revendication 1, caractérisé en ce que le relais (26) est un relais normalement ouvert et en ce qu'il est prévu des moyens de circuit (50, 56, 58) reliant ledit relais (26) et ledit circuit avertisseur de danger (42, 46) pour entraîner la fermeture du relais (26) lorsque le circuit avertisseur de danger est fermé et que le système avertisseur de danger est en fonctionnement.

3. Véhicule à moteur selon la revendication 2, dans lequel lesdits moyens (50, 56, 58) reliant ledit relais et ledit système avertisseur de danger servent à engendrer un signal électrique continu à partir du signal intermittent engendré par le système avertisseur de danger et à transmettre ce signal continu audit relais.

4. Véhicule à moteur selon la revendication 3, dans lequel ledit système avertisseur de danger comporte des feux de détresse avant et arrière (46, 48) situés respectivement à l'avant et à l'arrière du véhicule et dans lequel les moyens de circuit reliant le relais et le circuit avertisseur de danger sont connectés au circuit avertisseur de danger en un point adjacent aux feux arrière du véhicule.

## Patentansprüche

1. Kraftfahrzeug, welches eine motorisch betriebene Hebetür hat und einen elektrischen Hebetür-Schaltkreis (10) aufweist, der mit einer elektrischen Kraftquelle (12) verbunden ist und der, wenn vervollständigt, der Betätigung der Hebetür für ein Anheben und ein Absenken dient, und einen Gefahren-Warnkreis, um unabhängig das pulsierende Gefahren-Warnlichtsystem des Fahrzeuges zu betätigen, **gekennzeichnet** durch ein Relais (26) in dem Hebetür-Schaltkreis (10), wobei das Relais (26) auf die Betätigung des Gefahren-Warnkreises (28, 32, 36, 40) anspricht, um den Hebetür-Schaltkreis (10) nur dann betriebsbereit zu halten, wenn der Gefahren-Warnkreis arbeitet.

2. Kraftfahrzeug nach Anspruch 1, dadurch **gekennzeichnet,** daß das Relais (26) ein normal geöffnetes Relais ist und daß eine Schaltkreiseinrichtung (50, 56, 58) vorgesehen ist, die eine Verbindung zwischen dem Relais (26) und dem Gefahren-Warnkreis (42, 46) herstellt, um das Relais (26) zu schließen, wenn der Gefahren-Warnkreis vervollständigt ist und das Gefahren-Warnsystem arbeitet.

3. Kraftfahrzeug nach Anspruch 2, bei welchem die Schaltkreiseinrichtung (50, 56, 58), die zwischen dem Relais und dem Gefahren-Warnsystem verbunden ist, der Erzeugung eines kontinuierlichen elektrischen Signals aus dem intermittierenden Signal dient, das von dem Gefahren-Warnsystem erzeugt wird, und der Übermittlung des kontinuierlichen Signals an das Relais.

4. Kraftfahrzeug nach Anspruch 3, bei welchem das Gefahren-Warnlichtsystem vordere und hintere Warnleuchten (46, 48) umfaßt, die an der Vorderseite und an der Rückseite des Fahrzeuges angeordnet sind, und bei welchem die Schaltkreiseinrichtung, die zwischen dem Relais und dem Gefahren-Warnkreis verbunden ist, an den Gefahren-Warnkreis an einer Stelle nahe den hinteren Fahrzeugleuchten angeschlossen ist.

FIG.1

EP 0 269 210 B1